# EUROPÄISCHE PATENTSCHRIFT

(11) **EP 2 250 371 B1**
(45) Veröffentlichungstag und Bekanntmachung des Hinweises auf die Patenterteilung: **06.07.2011**
(21) Anmeldenummer: 08873241.7
(22) Anmeldetag: 06.11.2008
(51) Int. Cl.: F03D 9/00, F03D 11/00

(54) **WINDENERGIEANLAGE ZUR ERZEUGUNG ELEKTRISCHER ENERGIE**
WIND TURBINE FOR GENERATING ELECTRIC POWER
ÉOLIENNE POUR LA PRODUCTION D'ÉNERGIE ÉLECTRIQUE

(30) Priorität: 11.03.2008 DE 102008013728
(43) Veröffentlichungstag der Anmeldung: 17.11.2010
(73) Patentinhaber: Kenersys GmbH, 48155 Münster (DE)
(72) Erfinder: BECKER, Markus, 48147 Münster (DE)
(74) Vertreter: Bossmeyer, Jörg Peter
(86) Internationale Anmeldenummer: PCT/EP2008/065056
(87) Internationale Veröffentlichungsnummer: WO 2009/112093

(56) Entgegenhaltungen:
- DE-A1- 3 231 016
- DE-U1-202005 014 797
- US-B1- 6 877 360

## Beschreibung

Die Erfindung betrifft eine Windenergieanlage zur Erzeugung elektrischer Energie durch Luftanströmung auf einen um eine Rotorachse drehbaren Rotor mit mehreren Rotorblättern, der über eine Rotorwelle mit einem Generator gekoppelt ist, wobei zur Übersetzung der Drehzahl zwischen Rotorwelle und Generatoreingangswelle ein Hauptgetriebe vorhanden ist, dessen eine Schmiermittelpumpe aufweisende Druck- oder Zwangsschmierung die Versorgung von Verschleiß unterliegenden Bauteilen mit Schmiermittel ermöglicht.

Eine derartige Windenergieanlage ist z.B. aus der DE 32 31 016 A1 bekannt.

Windenergieanlagen zur Erzeugung elektrischer Energie durch Luftanströmung auf einen um eine Rotorachse drehbaren Rotor sind in vielfältigen Ausführungsvarianten aus dem Stand der Technik bekannt. Dabei ist eine um die Rotorachse drehbare Rotorwelle mit einem Generator gekoppelt. Zur Übersetzung der Drehzahl dient ein zwischen der Rotorwelle und der Generatoreinganswelle vorhandenes Hauptgetriebe. Die in Folge ihrer Relativbewegung einem Verschleiß unterliegenden Bauteile werden mittels einer Druck- oder Zwangsschmierung mit Schmiermittel versorgt, bei dem es sich in der Regel um ein fließfähiges Schmieröl geeigneter Viskosität handelt. Zur Förderung des Schmiermittels kommen Schmiermittelpumpen zum Einsatz.

Das Hauptgetriebe in derartigen Windenergieanlagen dient der Übersetzung eines hohen Drehmomentes und einer geringen Drehzahl der Rotorwelle, auf eine hohe Drehzahl mit niedrigerem Drehmoment auf der schnelleren Seite des Hauptgetriebes, also auf der Seite des Generators. Auf diese Weise kann folglich die von der Rotorwelle herrührende kinetische Energie mittels unterschiedlicher Generatorsysteme in elektrische Energie gewandelt werden. Dabei ist es bekannt, Umrichter oder andere Leistungselektroniken einzusetzen.

Insbesondere das Hauptgetriebe unterliegt aufgrund der hohen Lastwechselzahlen und des Dauerbetriebes erheblichen Ermüdungsbelastungen, sodass Bauelemente wie beispielsweise die Verzahnungen und die Lager, einer effizienten Schmierung bedürfen, um Verschleiß oder Beschädigungen zu verhindern und eine ausreichende Lebensdauer der Windenergieanlage zu gewährleisten. In Windenergieanlagen werden neben Tauchschmiersystemen hauptsächlich Druck- oder Zwangsschmierungen verwendet. Die Druck- oder Zwangsschmierung erfordert eine Schmiermittelpumpe, die sowohl mechanisch als auch elektrisch betrieben werden kann.

Derartige Schmiermittelpumpen sind häufig mit einem Filter und/oder Wärmetauscher kombiniert, um die Reinheit und/oder die Temperatur des Schmieröls zu regeln. Die Aufgabe der Schmiermittelpumpe besteht darin, das erwärmte Schmieröl aus dem Getriebesumpf anzusaugen und es beispielsweise durch einen oder mehrere Filter, bzw. in Abhängigkeit von der gegebenen Öltemperatur durch einen Wärmetauscher zu fördern, sodass es anschließend temperiert und gereinigt dem Hauptgetriebe zugeführt werden kann.

Mechanische Schmiermittelpumpen werden teilweise über ein Vorgelegegetriebe in das Hauptgetriebe eingebunden und sind damit hinsichtlich ihrer Übersetzung bzw. Drehzahl für den Betriebsdrehzahlbereich der Windenergieanlage ausgelegt.

Ein Nachteil mechanisch angetriebener Schmiermittelpumpen besteht darin, dass die Übersetzung dieser Schmiermittelpumpen normalerweise derart ausgelegt ist, dass erst ab einer Mindestdrehzahl des Rotors eine nennenswerte Menge Schmieröl gefördert werden kann. Diese Grenze liegt deutlich über der Trudeldrehzahl einer Windenergieanlage. Diese Trudeldrehzahl liegt etwa im Bereich zwischen einer bis fünf oder sogar bis acht Umdrehungen pro Minute. Wenn diese Schmiermittelpumpen aber bereits bei geringen Drehzahlen ein zufrieden stellendes Fördervolumen erzeugten, wären die Schmiermittelpumpen bei hohen Drehzahlen, das heißt, während des Betriebes der Windenergieanlage im Nennleistungsbereich, extrem stark belastet. Im unteren Drehzahlbereich wären sie jedoch überdimensioniert.

Alternativ kommen elektrisch betriebene Schmiermittelpumpen zur Druck- oder Zwangsschmierung zum Einsatz, deren Betrieb über eine herkömmliche Spannungsversorgung des elektrischen Netzes erfolgt. Eine besondere Problematik, die sich bei Windenergieanlagen stellt, besteht jedoch darin, dass bei Netzausfällen oder bei der Erstinstallation bzw. nach einer an der Windenergieanlage erforderlichen Reparatur keine elektrische Spannung vorhanden ist, um eine elektrische Schmiermittelpumpe betreiben zu können. Bei Stromausfall weisen die elektrisch betriebenen Schmiermittelpumpen somit einen Nachteil für Windenergieanlagen auf, weil es an der erforderlichen Schmierung mangelt und damit die Gefahr vorzeitigen Verschleißes gegeben ist.

Ausgehend hiervon liegt der Erfindung die Aufgabe zugrunde, eine Windenergieanlage zur Erzeugung elektrischer Energie bereitzustellen, die in einfacher und damit kostengünstiger Weise eine Möglichkeit schafft, während des Trudelbetriebes und/oder bei Netzausfall, eine ausreichende Versorgung von Verschleiß unterliegenden Bauteilen mit einem Schmiermittel zu gewährleisten.

Diese Aufgabe wird erfindungsgemäß mit einer Windenergieanlage nach Anspruch 1 gelöst. Bevorzugte Weiterbildungen der Erfindung sind in den Unteransprüchen wiedergegeben.

Eine Windenergieanlage zur Erzeugung elektrischer Energie durch Luftanströmung auf einen um eine Rotorachse drehenden oder drehbaren Rotor mit mehreren Rotorblättern, der über eine Rotorwelle mit einem Generator gekoppelt ist, wobei zur Übersetzung der Drehzahl zwischen Rotorwelle und Generatoreingangswelle ein Hauptgetriebe vorhanden ist, dessen eine Schmiermittelpumpe aufweisende Druck- oder Zwangsschmierung die Versorgung von Verschleiß unterliegenden Bauteilen mit Schmiermittel ermöglicht, wurde erfindungsgemäß dahingehend weitergebildet, dass die Windenergieanlage eine, insbesondere im Normalbetrieb der Windenergieanlage außer Funktion gesetzte, im Trudelbetrieb und/oder bei Netzausfall zuschaltbare, durch den rotierenden Rotor betriebene oder betreibbare Notlaufpumpe zur Schmiermittelversorgung aufweist.

Mit der Erfindung wird zusätzlich zu der Schmiermittelpumpe eine Notlaufpumpe bereitgestellt, die eine zuverlässige Schmiermittelversorgung der einem Verschleiß unterliegenden Bauteile auch in kritischen Situationen, wie bei einem Netzausfall und/oder während des Trudelbetriebes einer Windenergieanlage sicherstellt. Um den Wirkungsgrad der Windenergieanlage insgesamt zu verbessern, wird die Notlaufpumpe bevorzugt nur in den zuvor genannten kritischen Betriebszuständen zugeschaltet. Im Normalbetrieb der Windenergieanlage ist die Notlaufpumpe vorzugsweise außer Betrieb und damit nicht in Funktion. Somit können Energieverluste vermieden werden. Die erfindungsgemäße Lösung lässt sich sehr einfach und ohne erheblichen konstruktiven Mehraufwand umsetzten und gewährleistet eine Erhöhung der Lebensdauer der gesamten Windenergieanlage, bzw. eine Reduzierung der Wartungsintervalle.

Die Schmiermittelpumpe wird z.B. elektrisch betrieben. Die dafür erforderliche Zufuhr elektrischer Energie erfolgt vorzugsweise über eine herkömmliche Spannungsversorgung des elektrischen Netzes. Ergänzend oder Alternativ kann die Schmiermittelpumpe aber auch mechanisch betrieben sein. In diesem Fall ist die Schmiermittelpumpe vorzugsweise über ein Vorgelegegetriebe in das Hauptgetriebe eingebunden und damit hinsichtlich ihrer Übersetzung bzw. Drehzahl für den Betriebsdrehzahlbereich der Windenergieanlage ausgelegt. Insbesondere ist/wird die mechanische Schmiermittelpumpe zumindest mittelbar durch den Rotor antreibbar/angetrieben.

Gemäß einer ersten Ausgestaltung der Erfindung wird vorgeschlagen, dass die Windenergieanlage zur Zu- und/oder Abschaltung der Notlaufpumpe eine Kupplungseinheit aufweist. Die Kupplungseinheit dient dabei der Zu- und/oder Abschaltung der Notlaufpumpe, was beispielsweise die Kupplung der Notlaufpumpe mit einer Welle des Hauptgetriebes bedeuten kann.

Entsprechend einer bevorzugten Ausführungsform der Erfindung kann die Kupplungseinheit eine schaltbare Kupplung aufweisen. Unter der schaltbaren Kupplung ist im erfindungsgemäßen Sinne jede Art einer schaltbaren Kupplung zu verstehen. Von Bedeutung ist dabei lediglich, dass für den Fall des Bedarfs der Notlaufpumpe, also beispielsweise bei einem Netzausfall, die Notlaufpumpe automatisch zugeschaltet wird. Bevorzugt ist die Notlaufpumpe unter Zwischenschaltung der schaltbaren Kupplung mit einer der Wellen des Hauptgetriebes gekoppelt. Insbesondere ermöglicht die schaltbare Kupplung die Trennung der Notlaufpumpe vom Rotor bzw. vom mechanischen Triebstrang der Windenergieanlage, vorzugsweise in Abhängigkeit von der Rotordrehzahl und/oder von der Verfügbarkeit des elektrischen Netzes, in das der Generator im Normalbetrieb der Windenergieanlage einspeist.

Es besteht die Möglichkeit, als schaltbare Kupplung eine "Fail-Safe-Kupplung" vorzusehen. Insbesondere weist die schaltbare Kupplung eine elektrische, magnetische oder hydraulische Öffnungsmöglichkeit auf. Darüber hinaus ist eine sinnvolle Ergänzung darin zu sehen, dass die schaltbare Kupplung bei Trudelbetrieb und/oder bei Netzausfall durch einen Federmechanismus geschlossen wird oder werden kann. Bevorzugt ist die schaltbare Kupplung im Normalbetrieb der Windenergieanlage, insbesondere gegen die Federkraft des Federmechanismus, geöffnet. Solange die Netzversorgung der Windenergieanlage besteht, ist eine derartige Kupplung also beispielsweise über einen elektromagnetischen Mechanismus geöffnet. Bei Netzausfall schließt die Kupplung mit Unterstützung der Federkraft, sodass beispielsweise eine kraft- oder reibschlüssige Verbindung mit einer drehenden Welle herbeigeführt werden kann.

Gemäß einer Weiterbildung ist der Notlaufpumpe ein Notlaufgetriebe vorgeschaltet, dessen Ausgangswellendrehzahl zum Antrieb der Notlaufpumpe und damit der Schmiermittelversorgung auch bei geringen Rotordrehzahlen ausreicht. Insbesondere ist das Notlaufgetriebe zwischen Notlaufpumpe und Hauptgetriebe geschaltet. Das Notlaufgetriebe ist z.B. der schaltbaren Kupplung vorgeschaltet, der sich die Notlaufpumpe anschließt. Alternativ ist das Notlaufgetriebe z.B. zwischen die schaltbare Kupplung und die Notlaufpumpe geschaltet.

Um die Variationsbreite der erfindungsgemäßen Windenergieanlage und der zum Einsatz kommenden Notlaufpumpe zu vergrößern, besteht eine Weiterbildung der Erfindung darin, dass die Windenergieanlage mehrere rotierende Wellen unterschiedlicher Drehzahlen aufweist und die Notlaufpumpe mit zumindest einer dieser Wellen, insbesondere unter Zwischenschaltung der schaltbaren Kupplung, gekuppelt oder kuppelbar ist. Die Notlaufpumpe kann somit an unterschiedlichen Stellen im Triebstrang der Windenergieanlage angreifen, der die rotierenden Wellen bevorzugt umfasst und zum Abgriff der kinetischen Energie und damit zum Antrieb der Notlaufpumpe dient oder dienen kann.

Bevorzugt ist ein Antrieb für die Notlaufpumpe im Bereich der schnell laufenden bzw. der mittelschnell laufenden Wellen vorzusehen, also z.B. auf der Ausgangsseite des Hauptgetriebes. Es besteht beispielsweise die Möglichkeit, die Notlaufpumpe mit einer Antriebswelle des Hauptgetriebes, mit einer Abtriebswelle des Hauptgetriebes oder mit einer Zwischenwelle des Hauptgetriebes zu koppeln. Die Antriebswelle des Hauptgetriebes ist insbesondere drehfest mit der Rotorwelle gekoppelt oder koppelbar. Ferner ist die Abtriebswelle des Hauptgetriebes insbesondere drehfest mit der Generatoreingangswelle gekoppelt oder koppelbar. Die Antriebswelle des Hauptgetriebes läuft relativ langsam und dreht bei einer Übersetzung von insbesondere 1:1 (Rotordrehzahl: Drehzahl der Antriebswelle) mit Rotordrehzahl. Die Abtriebswelle des Hauptgetriebes läuft im Vergleich zur Rotorwelle relativ schnell, wobei die Übersetzung insbesondere 1:70 bis 1:120 (Rotordrehzahl : Drehzahl der Abtriebswelle) beträgt. Die Zwischenwelle des Hauptgetriebes läuft im Vergleich zur Rotorwelle mittelschnell, wobei die Übersetzung insbesondere 1:10 bis 1:20 (Rotordrehzahl : Drehzahl der Zwischenwelle) beträgt. Bevorzugt ist die Notlaufpumpe unter Zwischenschaltung der schaltbaren Kupplung mit einer dieser Wellen des Hauptgetriebes, insbesondere mit der Zwischenwelle des Hauptgetriebes, gekoppelt.

Neben der Möglichkeit die Notlaufpumpe über ein konventionelles Verzahnungsgetriebe anzutreiben, ist darüber hinaus vorgesehen, dass die Notlaufpumpe über eine mechanische Kupplung mittels Zugmittel, wie Riemen oder Ketten, angetrieben wird oder werden kann. Unter Riemen im erfindungsgemäßen Sinne sind beispielsweise Zahnriemen oder Keilriemen zu verstehen, wobei ebenso Kurbel- und/oder Scheibengetriebe zur Drehmomentübertragung einsetzbar sind. Die mechanische Kupplung kann aber auch ein anderes mechanisches oder hydraulisches Übertragungssystem umfassen. Insbesondere bildet die mechanische Kupplung das Notlaufgetriebe oder einen Teil desselben.

Das Hauptgetriebe weist bevorzugt eine oder mehrere Planetenstufen und/oder zwei Stirnradgetriebestufen auf. Insbesondere ist die Übersetzung des Hauptgetriebes und/oder des Getriebes zum Betrieb der Notlaufpumpe, sowie die Kennlinie der Notlaufpumpe stets derart ausgelegt, dass bei geringen Trudeldrehzahlen ein Schmiermittelversorgungsdruck weiterhin zuverlässig gegeben ist.

Neben der Ausrüstung neu zu erstellender Windenergieanlagen mit einer erfindungsgemäßen Lösung ist es aufgrund der baulichen Einfachheit der Erfindung auch möglich, die zuschaltbare Notlaufpumpe zur Schmiermittelversorgung als nachrüstbaren Bausatz auszuführen.

Die Erfindung wird nachfolgend anhand einer bevorzugten Ausführungsform unter Bezugnahme auf die Zeichnung beschrieben. In der Zeichnung zeigen:
- Fig. 1:: eine schematisch stark vereinfachte Darstellung einer Windenergieanlage,
- Fig. 2:: eine Ansicht einer Getriebe-Generatoreinheit der Windenergieanlage,
- Fig. 3:: den Schnittverlauf III-III aus Fig. 2 in einer vereinfachten Darstellung,
- Fig. 4:: ein vereinfachtes Schema zur Darstellung des Prinzips der erfindungsgemäßen Windenergieanlage und
- Fig. 5:: ein mögliches Beispiel für eine schaltbare Kupplung in stark vereinfachter Darstellung.

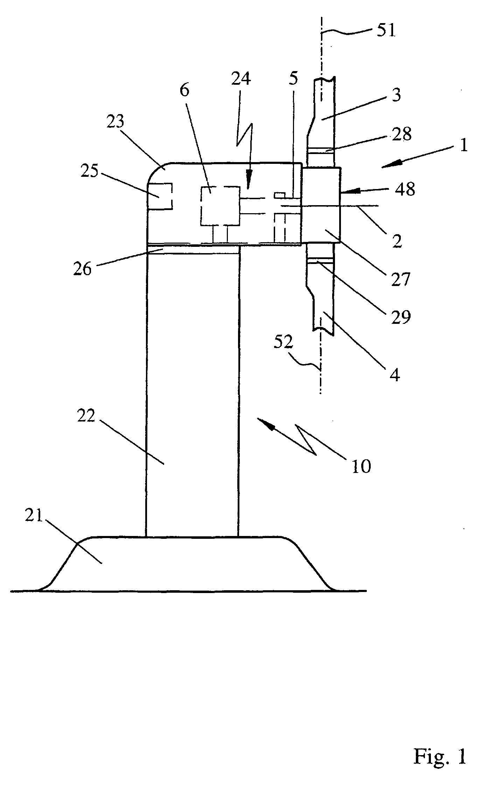

Aus Fig. 1 ist eine insgesamt mit 10 bezeichnete Windenergieanlage gemäß einer Ausführungsform der Erfindung ersichtlich. In ein Fundament 21 ist dabei ein gemäß den baulichen Anforderungen an die Windenergieanlage 10 ausgelegter Turm 22 eingesetzt. Den oberen Teil dieses Turmes 22 bildet ein Maschinenhaus 23, das zumindest abschnittsweise etwa vertikal zu der Ausrichtung des Turms 22 abragt. Innerhalb des Maschinenhauses 23 befindet sich eine Getriebe-Generatoreinheit 24, die mit einem mehrere Rotorblätter 3 und 4 aufweisenden und durch Wind angetriebenen Rotor 48 gekoppelt ist. Zwar sind aus Fig. 1 lediglich zwei Rotorblätter 3, 4 ersichtlich, der Rotor 48 kann aber auch drei oder mehr Rotorblätter aufweisen.

Der Rotor 48 ist um die Rotorachse 2 drehbar auf einer Rotorwelle 5 gelagert, die ihrerseits eine Verbindung zur Getriebe-Generatoreinheit 24 aufweist. Der Generator 6 der Getriebe-Generatoreinheit 24 befindet sich hier im hinteren, also dem Rotor 48 abgewandten Bereich des Maschinenhauses 23. Ferner weist die Windenergieanlage eine Windenergieanlagensteuerung 25 auf. Das Maschinenhaus 23 ist drehbar auf dem Turm 22 gelagert. Hierzu verfügt es über einen Azimutantrieb 26. Jedes der an einer Rotornabe 27 des Rotors 48 auf der Rotorwelle 5 gelagerten Rotorblätter 3, 4 kann dabei unabhängig voneinander mittels eines Verstellantriebs 28, 29 um seine Rotorblattachse 51, 52 gedreht werden, sodass die Rotorblätter 3, 4 verstellbar sind. Alternativ kann die Windenergieanlage aber auch eine Stall-Anlage ohne Pitch-System sein.

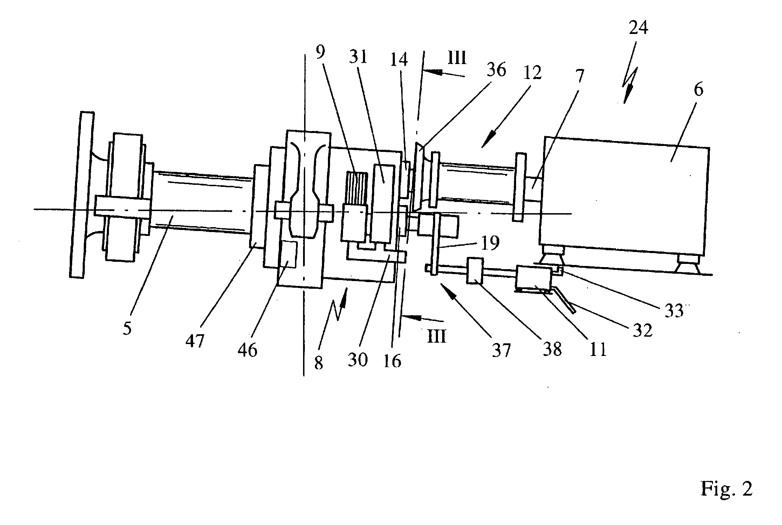

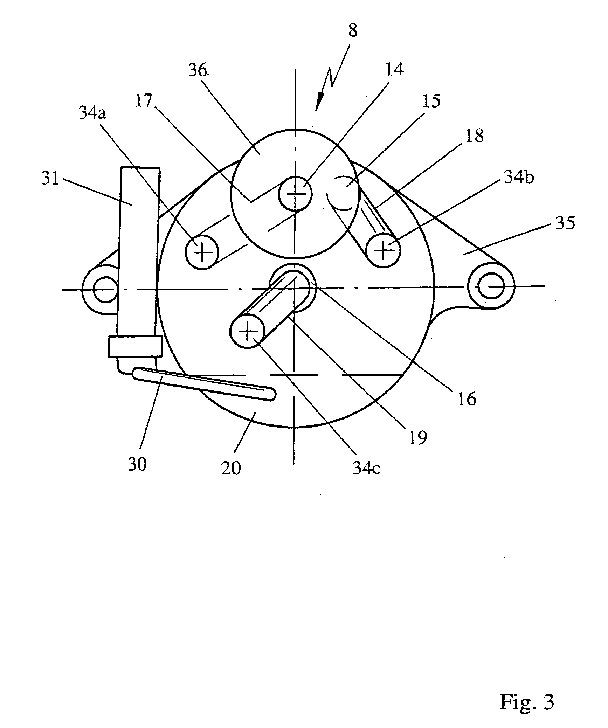

Fig. 2 zeigt die Getriebe-Generatoreinheit 24. Im linken Bildteil ist ein Teil der Rotorwelle 5 dargestellt. Diese ist mit dem Hauptgetriebe 8 gekoppelt. Auf der rechten Bildseite geht das Hauptgetriebe 8 in einen Generator 6 über, der zur Umsetzung der kinetischen Bewegungsenergie, welche von den Rotorblättern 3, 4 der Windenergieanlage 10 herrührt, in elektrische Energie dient. Zur Anbindung des Generators 6 an den Triebstrang weist der Generator 6 eine Generatoreingangswelle 7 auf. Die Verbindung zwischen Generator 6 und dem Hauptgetriebe 8 wird hierbei mittels einer Kupplung 12 hergestellt. Eine Schmienmittelpumpe 9 am Hauptgetriebe 8 ist für die Versorgung von einem Verschleiß unterliegenden Bauteilen der Windenergieanlage 10 mit dem für die Schmierung erforderlichen Schmiermittel verantwortlich. Als Schmiermittel wird ein förderfähiges Schmieröl eingesetzt. Das Schmiermittel wird durch die elektrisch betriebene Schmiermittelpumpe 9 über eine in den Getriebesumpf 20 (siehe Fig. 3) mündende Ansaugleitung 30 angesaugt. Zur Filterung des Schmiermittels dient eine Filtereinheit 31. Die dem Verschleiß unterliegenden Bauteile sind schematisch angedeutet und mit dem Bezugszeichen 46 versehen. Dabei bildet eines dieser Bauteile ein Wellenlager 47. Insbesondere handelt es bei den Bauteilen 46, 47 und bewegliche Teile, bevorzugt um Bauteile des Hauptgetriebes 8.

Das Hauptgetriebe 8 umfasst mehrere Wellen 14, 15 und 16, die am Gehäuse des Hauptgetriebes 8 drehbar gelagert sind und sich teilweise aus dem Gehäuse heraus erstrecken, wobei die sich aus dem Gehäuse heraus erstreckenden Wellenenden üblicherweise mit einem hier nicht dargestellten Deckel abgedeckt sind. Somit verfügt das Hauptgetriebe 8 insbesondere an seiner generatorseitigen Ausgangsseite über mehrere Wellenausgänge der Wellen 14, 15 und 16, deren Drehzahlen sich unterscheiden. Die Wellen sind besser in der Darstellung der Fig. 3 zu erkennen, auf die nachfolgend näher eingegangen wird. Die Welle 16 ist die mit der Rotorwelle 5 gekoppelte Antriebswelle des Hauptgetriebes 8, die Welle 15 ist eine Zwischenwelle des Hauptgetriebes 8 und die Welle 14 ist die mit der Generatoreingangswelle 7 gekoppelte Abtriebswelle des Hauptgetriebes 8. Erfindungsgemäß wird mit wenigstens einer dieser Wellen 14 bis 16 eine schaltbare Kupplung 38 gekoppelt, an der eine Notlaufpumpe 11 angeschlossen ist, die im Normalbetrieb der Windenergieanlage mittels der Kupplung 38 außer Funktion gesetzt ist und im Trudelbetrieb und/oder bei Netzausfall mittels der Kupplung 38 zuschaltbar ist. Damit wird die Notlaufpumpe 11 durch den rotierenden Rotor 48 bei Netzausfall und/oder im Trudelbetrieb betrieben. Eine entsprechend geeignete Übersetzung in Form eines Getriebes 37 zwischen der Ausgangswelle 14, 15 oder 16 und der Notlaufpumpe 11 bzw. der Kupplung 38 sorgt für eine ausreichende Drehzahl der Notlaufpumpe 11, beispielsweise auch im Trudelbetrieb, also bei sehr langsamen und geringen Drehzahlen der Windenergieanlage.

Zur Kopplung der Welle 16 mit der Notlaufpumpe 11 ist in Fig. 2 ein Riemen 19 vorgesehen, der zwischen der Welle 16 des Hauptgetriebes 8 und einer Eingangswelle 34c der Notlaufpumpe 11 und/oder Kupplung 38 angeordnet ist und somit eine Übertragung der Drehbewegung von der Welle 16 zur Eingangswelle 34c der Notlaufpumpe 11 und/oder Kupplung 38 ermöglicht. Der Riementrieb mit dem Riemen 19 bildet hierbei das Getriebe 37 (Notlaufgetriebe). Alternativ ist anstelle des Riemens 19 aber auch eine Kette oder eine das Getriebe 37 bildende Verzahnung möglich. Die Notlaufpumpe 11 verfügt über eine Ansaugleitung 32, die Schmiermittel aus dem Getriebesumpf 20 ansaugt. Ferner weist die Notlaufpumpe 11 eine Schmierölleitung 33 auf, welche die Bauteile 46, 47 mit dem erforderlichen Schmiermittel versorgt. Die in der Fig. 2 beschriebene Möglichkeit des Abgriffs an einer der Wellen 14 bis 16 des Hauptgetriebes 8 für die Notlaufpumpe 11 ist nur als beispielhafte Variante zu verstehen. Die übrigen Möglichkeiten der Kombination der Notlaufpumpe 11 mit einer der Wellen 14 bis 16 sind aus Fig. 3 ersichtlich.

Fig. 3 stellt den Schnittverlauf III-III aus Fig. 2 in einer stark vereinfachten Ansicht dar. Mit Blickrichtung auf das Hauptgetriebe 8 sind eine Drehmomentstütze 35, eine Bremsscheibe 36 sowie andeutungsweise ein Getriebesumpf 20 erkennbar. Im linken Bildteil der Fig. 3 ist die Filtereinheit 31 mit der im unteren Teil vorhandenen Ansaugleitung 30 dargestellt. Zur Erläuterung des Prinzips der erfindungsgemäßen Lösung sind in der Fig. 3 die drei verschiedenen, aus dem Hauptgetriebe 8 herausragenden Wellen 14, 15 und 16 angedeutet. Jede dieser Wellen 14, 15 oder 16 kann über einen Riemen 17, 18 bzw. 19 mit der Eingangswelle 34 der Notlaufpumpe 11 und/oder der Kupplung 38 gekoppelt sein. Zur Unterscheidung der verschiedenen Fallkonstellationen wurde in der Fig. 3 die Eingangswelle 34 jeweils mit 34a, 34b und 34c gekennzeichnet. Dabei handelt es sich jeweils um die Eingangswelle 34 der Notlaufpumpe 11 und/oder der Kupplung 38. Zur Unterscheidung wurden die Buchstaben a, b und c lediglich deshalb verwendet, um die unterschiedlichen Kupplungsmöglichkeiten dieser Eingangswelle 34 mit den Wellen 14 bis 16 des Hauptgetriebes 8 darzustellen.

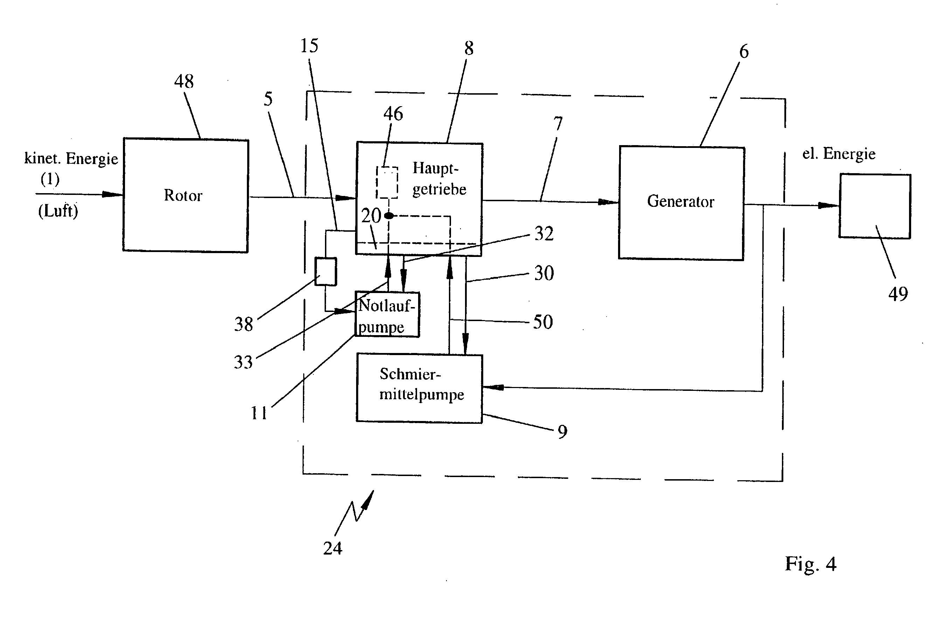

Das in der Fig. 4 dargestellte Schaubild zeigt die Funktionsweise der erfindungsgemäßen Windenergieanlage in schematisch stark vereinfachter Weise. Die auf den Rotor 48 auftreffende Luftströmung 1 hat kinetische Energie, welche den Rotor 48 in eine Rotationsbewegung versetzt. Diese Rotationsbewegung wird über die mit dem Rotor 48 verbundene Rotorwelle 5 auf das Hauptgetriebe 8 übertragen und hier in eine Drehzahl gewandelt, die von dem mit dem Hauptgetriebe 8 gekuppelten Generator 6 an dessen Generatoreingangswelle 7 aufgenommen werden kann, sodass die zur Verfügung stehende kinetische Energie zumindest zum Teil in elektrische Energie wandelbar ist oder gewandelt wird. Die elektrische Energie wird vom Generator 6 an hierzu geeignete Abnehmer abgegeben. Insbesondere weist der Generator 6 eine elektrische Kopplung mit einem elektrischen Netz 49 auf, welches beispielsweise das öffentliche Stromverteilernetz, ein Windparknetz oder ein anderes Verteilernetz sein kann. Die Getriebe-Generatoreinheit 24 ist in einem gestrichelten Kasten dargestellt, zu der neben dem Hauptgetriebe 8 und dem Generator 6 auch die für die Schmierung der dem Verschleiß unterliegenden Bauteile 46, 47 erforderliche Schmiermittelpumpe 9 gehört. Die Schmiermittelpumpe 9 stellt dem Hauptgetriebe 8 aus dem Getriebesumpf 20 abgesaugtes Schmiermittel an den benötigten Bauteilpaarungen 46, 47 zur Verfügung. Die Schmiermittelpumpe 9 wird elektrisch aus dem Netz 49 versorgt und saugt über die Ansaugleitung 30 Schmiermittel aus dem Getriebe 8 an, um es durch die Schmierölleitung 50 wieder zum Getriebe 8 zurück zu fördern.

Erfindungsgemäß ist die Windenergieanlage ferner mit der Notlaufpumpe 11 ausgestattet, die im Normalbetrieb außer Funktion ist und nur zum Einsatz kommt, wenn ein Trudelbetrieb der Windenergieanlage zu verzeichnen ist und/oder sich ein Netzausfall einstellt. Bei einem Netzausfall wird die Schmiermittelpumpe 9 nicht mehr mit elektrischer Energie versorgt. Die Notlaufpumpe 11 kann jedoch ihre für den Betrieb erforderliche Energie von dem Rotor 48 erhalten. Insbesondere ist diese Funktion für den Betrieb der Notlaufpumpe 11 von Bedeutung, da die Notlaufpumpe 11, gegebenenfalls unter Zwischenschaltung eines weiteren Getriebes, die auch im Trudelbetrieb gegebene Drehzahl des Rotors 48 nutzen kann, um für die vom Verschleiß betroffenen Bauteile 46, 47 eine Schmiermittelversorgung bereitzustellen. Die Notlaufpumpe 11 ist, wie dies aus der Fig. 4 hervorgeht, mit der Zwischenwelle 15 unter Zwischenschaltung der schaltbaren Kupplung 38 gekuppelt oder kuppelbar (dies entspricht der Fallkonstellation 34b aus Fig. 3). Die Notlaufpumpe 11 saugt über die Ansaugleitung 32 Schmiermittel aus dem Getriebe 8 an und fördert es durch die Schmierölleitung 33 wieder zum Getriebe 8 zurück.

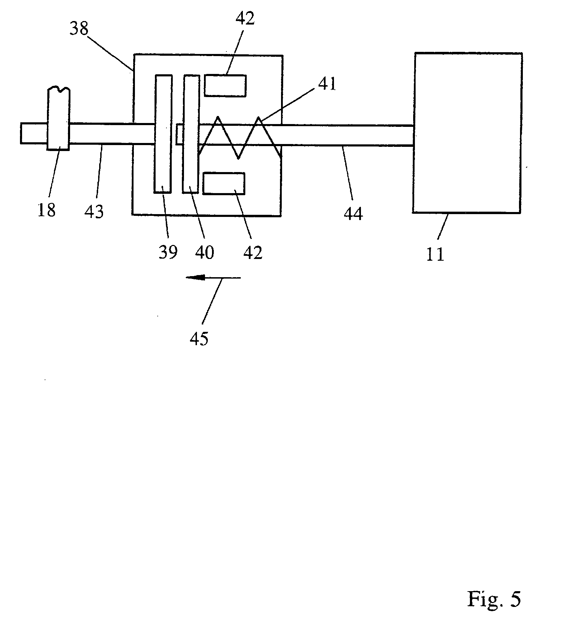

In Fig. 5 ist eine Realisierungsmöglichkeit für die schaltbare Kupplung 38 dargestellt. Die schaltbare Kupplung 38 weist eine starr mit der Eingangswelle 43 der Kupplung 38 verbundene erste Kupplungsscheibe 39 und eine drehfest mit der Ausgangswelle 44 der Kupplung 38 verbundene zweite Kupplungsscheibe 40 auf. Die zweite Kupplungsscheibe 40 ist in Richtung und in Gegenrichtung des Pfeils 45 auf der Ausgangswelle 44 verschiebbar und Richtung des Pfeils 45 durch eine Feder 41 vorgespannt. Ferner sind Elektromagnete 42 vorgesehen, die im bestromten Zustand die zweite Kupplungsscheibe 40 in Gegenrichtung des Pfeils 45 von der ersten Kupplungsscheibe 39 weg bewegen können. Im stromlosen Zustand der Elektromagnete 42 drückt die Feder 41 die zweite Kupplungsscheibe 40 gegen die erste Kupplungsscheibe 39, sodass die beiden Kupplungsscheiben 39, 40 und damit auch die beiden Wellen 43, 44 zur Übertragung einer Drehbewegung reibschlüssig miteinander gekuppelt sind. Die Notlaufpumpe 11 ist in diesem Zustand mit der entsprechenden Welle 14, 15 oder 16 des Hauptgetriebes 8 (hier mit Welle 15 über Riemen 18) gekuppelt und wird von dem Rotor 48 angetrieben. Im bestromten Zustand der Elektromagnete 42 wird die zweite Kupplungsscheibe 40 in Gegenrichtung des Pfeils 45 von der ersten Kupplungsscheibe 39 abgerückt, sodass die beiden Wellen 43, 44 voneinander getrennt sind. Die Notlaufpumpe 11 ist in diesem Zustand von der entsprechenden Welle 14, 15 oder 16 des Hauptgetriebes 8 entkuppelt und wird nicht von dem Rotor 48 angetrieben.

Bei der Welle 43 handelt es sich insbesondere um die Eingangswelle 34, bevorzugt um die Fallkonstellation 34b. Gemäß einer Variante kann das Bezugzeichen 42 auch eine hydraulische Öffnungsmöglichkeit für die Kupplung 38 repräsentieren.

### Bezugszeichenliste:

- 1: Luftströmung
- 2: Rotorachse
- 3: Rotorblatt
- 4: Rotorblatt
- 5: Rotorwelle
- 6: Generator
- 7: Generatoreingangswelle
- 8: Hauptgetriebe
- 9: Schmiermittelpumpe
- 10: Windenergieanlage
- 11: Notlaufpumpe
- 12: Kupplung
- 14: Welle
- 15: Welle
- 16: Welle
- 17: Riemen oder Kette
- 18: Riemen oder Kette
- 19: Riemen oder Kette
- 20: Getriebesumpf
- 21: Fundament
- 22: Turm
- 23: Maschinenhaus
- 24: Getriebe-Generatoreinheit
- 25: Windenergieanlagensteuerung
- 26: Azimutantrieb
- 27: Rotornabe
- 28: Verstellantrieb
- 29: Verstellantrieb
- 30: Ansaugleitung
- 31: Filtereinheit
- 32: Ansaugleitung
- 33: Schmierölleitung
- 34: Eingangswelle der Notlaufpumpe/schaltbare Kupplung
- 34a: Eingangswelle der Notlaufpumpe/schaltbare Kupplung (Variante a)
- 34b: Eingangswelle der Notlaufpumpe/schaltbare Kupplung (Variante b)
- 34c: Eingangswelle der Notlaufpumpe/schaltbare Kupplung (Variante c)
- 35: Drehmomentstütze
- 36: Bremsscheibe
- 37: Getriebe
- 38: schaltbare Kupplung
- 39: Kupplungsscheibe
- 40: Kupplungsscheibe
- 41: Feder
- 42: Elektromagnet
- 43: Eingangswelle der schaltbaren Kupplung
- 44: Ausgangswelle der schaltbaren Kupplung
- 45: Pfeil
- 46: einem Verschleiß unterliegende Bauteile
- 47: (Wellen-) Lager
- 48: Rotor
- 49: elektrisches Netz / Verteilernetz
- 50: Schmierölleitung
- 51: Rotorblattachse
- 52: Rotorblattachse

## Patentansprüche

1. Windenergieanlage zur Erzeugung elektrischer Energie durch Luftanströmung (1) auf einen um eine Rotorachse (2) drehbaren Rotor (48) mit mehreren Rotorblättern (3, 4), der über eine Rotorwelle (5) mit einem Generator (6) gekoppelt ist, wobei zur Übersetzung der Drehzahl zwischen Rotorwelle (5) und Generatoreingangswelle (7) ein Hauptgetriebe (8) vorhanden ist, dessen eine Schmiermittelpumpe (9) aufweisende Druck- oder Zwangsschmierung die Versorgung von Verschleiß unterliegenden Bauteilen (46, 47) mit Schmiermittel ermöglicht,
**dadurch gekennzeichnet, dass**
die Windenergieanlage (10) eine im Normalbetrieb der Windenergieanlage außer Funktion gesetzte und im Trudelbetrieb und/oder bei Netzausfall zuschaltbare, durch den rotierenden Rotor (48) betriebene Notlaufpumpe (11) zur Schmiermittelversorgung aufweist.

2. Windenergieanlage nach Anspruch 1,
**dadurch gekennzeichnet, dass**
die Windenergieanlage (10) zur Zu- und/oder Abschaltung der Notlaufpumpe (11) eine Kupplungseinheit aufweist.

3. Windenergieanlage nach Anspruch 2,
**dadurch gekennzeichnet, dass**
die Kupplungseinheit eine schaltbare Kupplung (38) aufweist.

4. Windenergieanlage nach Anspruch 3,
**dadurch gekennzeichnet, dass**
die schaltbare Kupplung (38) mit einer elektrischen, magnetischen oder hydraulischen Öffnungsmöglichkeit ausgeführt ist.

5. Windenergieanlage nach Anspruch 3 oder 4,
**dadurch gekennzeichnet, dass**
die schaltbare Kupplung (38) bei Trudelbetrieb und/oder bei Netzausfall durch einen Federmechanismus (41) geschlossen wird oder werden kann und im Normalbetrieb der Windenergieanlage (10) geöffnet ist.

6. Windenergieanlage nach einem der Ansprüche 3 bis 5,
**dadurch gekennzeichnet, dass**
die schaltbare Kupplung (38) einen Elektromagneten (42) aufweist.

7. Windenergieanlage nach einem der vorstehend genannten Ansprüche,
**dadurch gekennzeichnet, dass**
die Windenergieanlage (10) mehrere rotierende Wellen (14, 15, 16) unterschiedlicher Drehzahlen aufweist und die Notlaufpumpe (11) mit einer dieser Wellen (14, 15, 16) kuppelbar oder gekuppelt ist.

8. Windenergieanlage nach Anspruch 7,
**dadurch gekennzeichnet, dass**
das Hauptgetriebe (8) die rotierenden Wellen (14, 15, 16) aufweist.

9. Windenergieanlage nach einem der vorstehend genannten Ansprüche,
**dadurch gekennzeichnet, dass**
die Notlaufpumpe (11) mit einem separaten Notlaufgetriebe (37) gekoppelt ist.

10. Windenergieanlage nach Anspruch 9,
**dadurch gekennzeichnet, dass**
das Notlaufgetriebe (37) ein Zugmittel (17, 18, 19) oder ein anderes mechanisches oder hydraulisches Übertragungssystem aufweist.

## Claims

1. Wind turbine for generating electric power by an air stream (1) onto a rotor (48) rotatable about a rotor axis (2) and having a plurality of rotor blades (3, 4), said rotor (48) being coupled to a generator (6) by means of a rotor shaft (5), wherein a primary transmission (8) is present for multiplying the rotation speed between rotor shaft (5) and generator input shaft (7), the pressure or force-feed lubrication system, comprising a lubricant pump, of the primary transmission (8) enabling the provision of lubricant to components (46, 47) subject to wear, **characterised in that** the wind turbine (10) comprises an emergency pump (11) for the provision of lubricant, said emergency pump (11) not being operational during normal operation of the wind turbine and being able to be switched on during spinning operation and/or during power failure and being operated by the rotating rotor (48).

2. Wind turbine according to Claim 1, **characterised in that** the wind turbine (10) comprises a coupling unit for switching the emergency pump (11) on and/or off.

3. Wind turbine according to Claim 2, **characterised in that** the coupling unit comprises a switchable coupling (38).

4. Wind turbine according to Claim 3, **characterised in that** the switchable coupling (38) is designed with an electrical, magnetic or hydraulic opening facility.

5. Wind turbine according to Claim 3 or 4, **characterised in that** the switchable coupling (38) is or can be closed by means of a spring mechanism (41) during spinning operation and/or during power failure and is open during normal operation of the wind turbine (10).

6. Wind turbine according to one of Claims 3 to 5, **characterised in that** the switchable coupling (38) comprises an electromagnet (42).

7. Wind turbine according to any one of the preceding claims, **characterised in that** the wind turbine (10) comprises a plurality of rotating shafts (14, 15, 16) of differing rotation speeds and the emergency pump (11) is or can be coupled to one of these shafts (14, 15, 16).

8. Wind turbine according to Claim 7, **characterised in that** the primary transmission (8) comprises the rotating shafts (14, 15, 16).

9. Wind turbine according to any one of the preceding claims, **characterised in that** the emergency pump (11) is coupled to a separate emergency transmission (37).

10. Wind turbine according to Claim 9, **characterised in that** the emergency transmission (37) comprises a tensioning means (17, 18, 19) or another mechanical or hydraulic transmission system.

## Revendications

1. Centrale éolienne pour générer de l'énergie électrique par écoulement d'air (1) sur un rotor (48) pouvant tourner autour d'un axe de rotor (2) et doté de plusieurs pales de rotor (3, 4), lequel rotor est couplé à une génératrice (6) par le biais d'un arbre de rotor (5), dans laquelle centrale il existe, pour la transmission de la vitesse de rotation entre l'arbre de rotor (5) et l'arbre d'entrée de la génératrice (7), un dispositif de transmission principal (8), dont un système de graissage sous pression ou forcé présentant une pompe de lubrification (9) permet d'alimenter en lubrifiant les composants (46, 47) soumis à l'usure,
**caractérisée en ce que**
la centrale éolienne (10) présente, pour l'alimentation en lubrifiant, une pompe de secours (11) actionnée par le rotor en rotation (48), qui est mise hors circuit en mode de fonctionnement normal de l'éolienne et peut être mise en circuit lors du fonctionnement en cas de turbulences et/ou lors d'une panne de secteur.

2. Centrale éolienne selon la revendication 1,
**caractérisée en ce que**
la centrale éolienne (10) présente une unité de couplage pour mettre en circuit et/ou hors circuit la pompe de secours (11).

3. Centrale éolienne selon la revendication 2,
**caractérisée en ce que**
l'unité de couplage présente un couplage commutable (38).

4. Centrale éolienne selon la revendication 3,
**caractérisée en ce que**
le couplage commutable (38) présente une ouverture de couplage électrique, magnétique ou hydraulique possibles.

5. Centrale éolienne selon la revendication 3 ou 4,
**caractérisée en ce que**
le couplage commutable (38) est fermé ou peut être fermé par un mécanisme à ressort (41) lors du fonctionnement en cas de turbulences et/ou lors d'une panne de secteur et est ouvert en mode de fonctionnement normal de l'éolienne (10).

6. Centrale éolienne selon l'une quelconque des revendications 3 à 5,
**caractérisée en ce que**
le couplage commutable (38) présente un électroaimant (42).

7. Centrale éolienne selon l'une quelconque des revendications précédentes,
**caractérisée en ce que**
la centrale éolienne (10) présente plusieurs arbres rotatifs (14, 15, 16) ayant des vitesses de rotation différentes et **en ce que** la pompe de secours (11) peut être couplée ou est couplée à un de ces arbres (14, 15, 16).

8. Centrale éolienne selon la revendication 7,
**caractérisée en ce que**
le dispositif de transmission principal (8) présente les arbres rotatifs (14, 15, 16).

9. Centrale éolienne selon l'une quelconque des revendications précédentes,
**caractérisée en ce que**
la pompe de secours (11) est couplée à un dispositif de transmission de secours séparé (37).

10. Centrale éolienne selon la revendication 9,
**caractérisée en ce que**
le dispositif de transmission de secours (37) présente un moyen d'entraînement (17, 18, 19) ou un autre système de transmission mécanique ou hydraulique.
